# EUROPÄISCHE PATENTSCHRIFT

(11) **EP 3 492 900 B1**
(45) Veröffentlichungstag und Bekanntmachung des Hinweises auf die Patenterteilung: **31.01.2024**
(21) Anmeldenummer: 18000745.2
(22) Anmeldetag: 19.09.2018
(51) Int. Cl.: G01N 1/38, G01N 1/22, G01N 15/00, G01N 1/34, G01N 15/06

(54) **VERFAHREN UND VORRICHTUNG ZUM VERDÜNNEN EINES AEROSOLS**
METHOD AND DEVICE FOR DILUTING AN AEROSOL
PROCÉDÉ ET DISPOSITIF DE DILUTION D'UN AÉROSOL

(30) Priorität: 30.11.2017 DE 102017011074
(43) Veröffentlichungstag der Anmeldung: 05.06.2019
(73) Patentinhaber: Palas GmbH Partikel-und Lasermesstechnik, 76229 Karlsruhe (DE)
(72) Erfinder: Mölter, Leander, D-76744 Wörth am Rhein (DE); Notheis, Ralf, D-76661 Philippsburg (DE); Roman, Joachim, D-76229 Karlsruhe (DE); Schmidt, Martin, D-76227 Karlsruhe (DE)
(74) Vertreter: Lichti - Patentanwälte Partnerschaft mbB

(56) Entgegenhaltungen:
- EP-A2- 1 757 921
- DE-A1- 4 218 690
- GB-A- 2 259 982
- US-A- 3 854 321

## Beschreibung

Die Erfindung betrifft Verfahren nach dem Oberbegriff der Ansprüche 1 und 10 und Vorrichtungen nach dem Oberbegriff der Ansprüche 5 und 8.

Ein Aerosol ist ein partikeltragendes Gas oder Gasgemisch, insbesondere Luft. Derartige Aerosole müssen aus verschiedensten Gründen untersucht werden.

Insbesondere bei zur Untersuchung verwendeten zählenden Messverfahren, mit denen die Zahl der durch ein Messvolumen strömenden Partikel pro Zeiteinheit und gegebenenfalls auch deren Größe erfasst wird, darf jeweils im Messvolumen nur ein Partikel gleichzeitig vorhanden sein. Bei hochkonzentrierten Aerosolen ist dies nicht gesichert. Sind zwei oder mehr Partikel gleichzeitig in einem Messvolumen, so führt dies zu Koinzidenzfehlern. Diese sind zum einen ein Zählfehler, da die Zahl der Partikel zu niedrig erfasst wird, weil beispielsweise zwei oder mehr Partikel nur als ein Partikel erfasst werden. Darüber hinaus ergibt sich ein Größenfehler, da mehrere Partikel als nur einer gesehen wird, wird dieser zu groß erfasst, wenn zwei oder mehr versetzt nebeneinander durch das Messvolumen strömende Partikel eine größere Fläche abdunkeln, als dies jeder einzelne Partikel tun würde.

Aus diesem Grunde sind daher hochkonzentrierte Aerosole zu verdünnen. Eine Reduzierung der Wahrscheinlichkeit solcher Fehler bis zu einem praktischen Ausschluss derselben kann dadurch geschehen, dass das Aerosol durch partikelfreies Gas verdünnt wird. Grundsätzlich kann hierzu ein externes Gas oder Gasgemisch, insbesondere auch Reinluft zugeführt werden. Nachteilig ist, dass dieses nicht die gleichen Parameter hat wie das Trägergas oder -gemisch des Aerosols, beispielsweise eine andere Feuchte und/oder Temperatur, wodurch die Messergebnisse verfälscht werden können.

Es ist bekannt beispielsweise gemäß der VDI Richtlinie VDI 3491, Blatt 15, Ziffer 4, Seite 4, das zuströmende Aerosol als Eintritts-Aerosol in zwei Aerosolströme aufzuspalten und zum einen den größeren Anteil durch einen Filter zu pumpen, der das Aerosol in diesem Zweig reinigt und ein Reingas oder Reingasgemisch, insbesondere auch partikelfreie Luft erzeugt, zum anderen in einem Bypass einen geringen Teil des Aerosols durch eine Kapillare - mit einem Innendurchmesser von 1 mm bei 150 mm Länge - zu leiten und stromab von Filter und Pumpe einerseits und Kapillare andererseits die beiden Ströme wieder zusammenzuführen und den Mischstrom der Sensoreinrichtung zuzuführen.

Nachteilig ist hierbei insbesondere, dass aufgrund des geringen Durchmessers der Kapillare sich Partikel, insbesondere flüssige Partikel, an der Wandung der Kapillare abscheiden, damit die Zusammensetzung des aus der Kapillare austretenden Aerosols verändern und damit auch das Messergebnis verfälschen können. Darüber hinaus besteht die Gefahr, dass die Kapillare verschmutzt. Aus diesem Grunde ist auch eine laufende Überwachung des Zustandes der Kapillare notwendig.

Die GB 2 259 982 A offenbart ein Verfahren zur Probenahme von Verunreinigungskonzentrationen in einem Fluid. Dabei wird eine aus dem Fluid entnommene Probe in einem Gehäuse 1 mit einem Einlass 6 für ein Verdünnungsfluid verdünnt. Die verdünnte Probe gelangt von dort in eine Mischkammer 8 zur Ablagerung auf oder in einem Sammelmedium 14 zur Analyse, wobei das Fluid durch eine Pumpe 18 durch das Gehäuse 1 gezogen wird. Das Verfahren ist besonders bei hohen Schadstoffkonzentrationen von Nutzen. Schwebstoffe in H2O-Proben können ebenfalls bestimmt werden. Bei diesem Verfahren werden Verunreinigungspartikel, wie aber Asbestfasern, auf einem Sammelmedium abgeschieden, so dass nach einer gewissen Zeit die abgeschiedenen Asbestfasern gezählt werden. Durch die Verdünnung soll erreicht werden, dass auch bei Langzeitmessungen die Faserkonzentration die für eine genaue Analyse durch optische Mikroskopie gegebene Grenze nicht überschritten wird. Nachteilig ist, dass Konzentrationen und insbesondere Konzentrationsänderungen nicht unverzüglich, in Echtzeit, festgestellt werden können, sondern nur nach einer bestimmten Messdauer von bis zu acht Stunden und dass ein hoher Personalaufwand zum Bestimmen mittels optischer Mikroskopie erforderlich ist.

Die EP 1 757 921 A2 zeigt eine Vorrichtung zur Aerosolmessung mit einer hohen Partikelkonzentration, wobei die Vorrichtung einen Verdünner zum Verdünnen der Partikelkonzentration in einem Probenaerosolstrom zur Bildung eines verdünnten Aerosolstroms und einen Sensor zum Erfassen der Partikel in dem verdünnten Aerosolstrom durch Dampfkondensation, Tröpfchenwachstum und optische Detektion umfasst. Eine solche Vorrichtung kann zusammen mit der Elektronik zum Betreiben der Vorrichtung und von Komponenten wie Pumpen und Filtern, die erforderlich sein können, in einem gemeinsamen Gehäuse untergebracht sein. Der Verdünner enthält einen Eingang für einen Aerosolstrom mit einer anfänglichen Partikelkonzentration und einen Verdünnungsstrom. Der Aerosolstrom und der Verdünnungsstrom fließen durch eine Beschränkung, die so bemessen ist, dass eine turbulente Strömung erzeugt wird, so dass der Verdünnungsstrom und der Aerosolstrom gemischt werden, um einen verdünnten Aerosolstrom zu erzeugen. Der Verdünnungsstrom wird gebildet, indem ein Teil aus dem verdünnten Aerosolstrom gezogen wird, wobei der Teil gefiltert wird, um saubere Luft zu erzeugen, die mit dem Aerosolstrom stromauf einer Restriktion gemischt wird. Das Reingas wird dem axial eintretenden Aerosol unmittelbar radial zugeführt, wodurch eine turbulente Strömung erzeugt wird, die ohnehin durch nachfolgende Einengungen oder Düsen verstärkt werden soll, was für kleine Partikel im Nanobereich zulässig sein mag, nicht aber für größere Partikel, sondern würde bei solchen zu Verlusten und damit einer Verfälschung der Messung aufgrund einer nicht repräsentativen Verdünnung führen. Im Übrigen erfasst der verwendete Kondensationspartikelzähler die Partikelanzahl integral, d.h. ein Partikelzahl und Größe gemeinsam repräsentierendes Signal, nicht aber Einzelpartikel oder eine Partikelgrößenverteilung, so dass das durch den Gegenstand der Druckschrift erreichbare Messergebnis beschränkt ist.

Der Erfindung liegt daher die Aufgabe zugrunde, ein Verfahren und eine Vorrichtung zu schaffen, die unter Vermeidung der genannten Nachteile die Bestimmung der Partikelgrößenverteilung eines Eintrittsaerosols auch bei hoher Partikelkonzentration und mit Rückschluss auf diesem ermöglicht.

Erfindungsgemäß wird die genannte Aufgabe mit einem Verfahren der eingangs genannten Art gelöst, welches die Merkmale des Anspruchs 1 oder des Anspruchs 10 aufweist.

Weiterhin ist zur Lösung der genannten Aufgabe eine gattungsgemäße Vorrichtung mit Merkmalen des Anspruchs 5 oder des Anspruchs 8 vorgesehen.

Im Text bezeichnet der Begriff eines Reingases ein von Flüssig- oder Feststoff-Partikeln befreites Gas als solches aus einer Gaskomponente oder ein Gasgemisch aus mehreren Einzelgasen, insbesondere partikelfreie Luft.

Gemäß bevorzugter Weiterbildungen des Verfahrens ist vorgesehen, dass das Reingas dem Eintritts-Aerosol in einem fest vorgegebenen Volumendurchflussverhältnis zugeführt wird, wobei insbesondere das Verhältnis von Volumendurchfluss des Eintritts-Aerosols und des diesem zugeführten Reingases durch einen Massenflussregler (MFC Mass Flow Controller) bestimmt wird.

In bevorzugter Weiterbildung kann darüber hinaus vorgesehen sein, dass das Eintritts-Aerosol in den Mischraum durch ein Zuführrohr zugeführt wird, das einen geringeren Querschnitt hat als der Ringraum und dass das dem Ringraum zugeführte Reingas oberhalb eines Auslassendes des Zuführrohrs in den Ringraum eingeleitet wird, wodurch eine intensive Durchmischung von Eintritts-Aerosol und Reingas bewirkt wird.

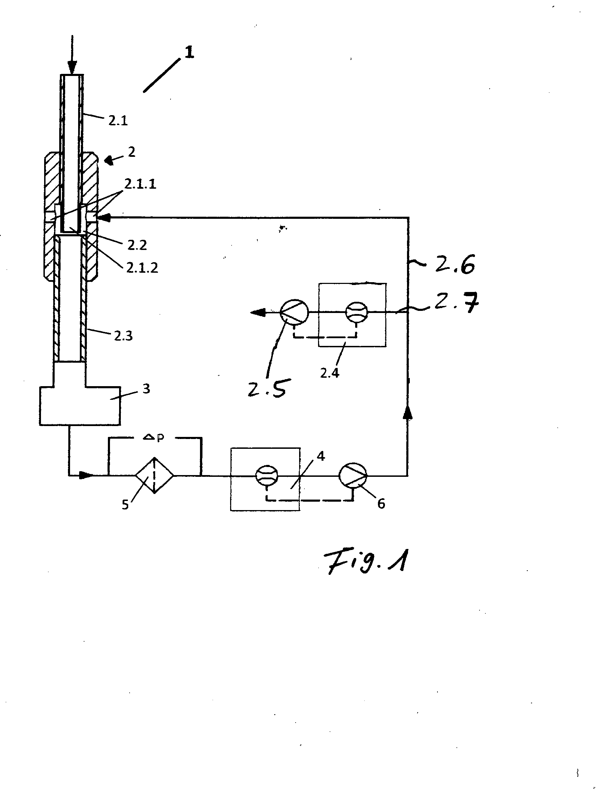

Das Austritts-Aerosol als solches vor der Reinigung durch eine optische Sensoreinrichtung geleitet (Fig. 1), wobei insbesondere nach dieser übermäßiges Reingas als Abluft abgeführt werden kann.

Stromab des Ringraums kann nur ein fester Teil des Austritts-Aerosols zur Reinigung abgezweigt und als partikelfreies Reingas stromauf des Mischraums wieder zugeführt werden.

Bei dem zweistufigen Verfahren des Anspruchs wird stromab einer ersten Mischstufe ein fester Teil des aus dieser austretenden Austritts-Aerosols als Zwischen-Aerosol zur Reinigung abgezweigt und als partikelfreies Reingas stromauf der Mischstufe wieder zugeführt, der nicht abgezweigte Teil dieses Zwischen-Aerosols wird durch eine zweite Mischstufe und eine folgende optische Sensoreinrichtung geleitet, anschließend - erneut - gereinigt, ein Teil des Reingases als Abluft wird abgeführt und ein weiterer Teil des in dieser zweiten Stufe gereinigten Reingases wird dieser oberhalb der Sensoreinrichtung wieder zugeführt zur Verbindung mit dem von der ersten Mischstufe zugeführten Zwischen-Aerosol.

Demgemäß wird das Aerosol als Eingangs-Aerosol konkret in einer ersten Verfahrensstufe einem ersten Ringraum zugeführt, stromab des ersten Ringraums ein fester Teil des aus dem ersten Ringraum austretenden Austritts-Aerosols zum Reinigen abgezweigt und als partikelfreies Reingas stromauf dem ersten Ringraum wieder zugeführt, und ein Teil des Austritts-Aerosols des ersten Ringraums einer zweiten Mischstufe zugeführt sowie in einer zweiten Verfahrensstufe Austritts-Aerosol der zweiten Mischstufe zu einem partikelfreien Reingas gereinigt und dieses Reingas der zweiten Mischstufe stromauf des Austritts der zweiten Mischstufe wieder zugeführt.

Das Austritts-Aerosol der zweiten Mischstufe kann vor der Reinigung durch eine optische Sensor-Einrichtung geleitet werden, wobei insbesondere übermäßiges Reingas als Abluft abgeführt wird.

In bevorzugten Ausgestaltungen der erfindungsgemäßen Vorrichtung ist vorgesehen, dass das Zuführrohr einen geringeren Querschnitt aufweist als der Ringraum und ein Auslass der Rückführleitung in den Ringraum stromauf des Austrittsendes des Zuführrohres angeordnet ist und/oder dass ein Abzweig-Massenflussregler in einem Abzweig der Rückführleitung zum Abzweigen eines bestimmten Teils des Reingases als Abluft angeordnet ist.

Zur Durchführung der vorstehend beschriebenen Verfahren sieht die Weiterbildung bevorzugt vor, dass das Einlassrohr einen geringeren Querschnitt aufweist als der Mischraum und der Einlass der Rückführleitung stromauf des Austrittsendes. Das Austritts-Aerosol wird grundsätzlich schon vor dem Reinigen durch eine Sensor-einrichtung geleitet. Ein Massenflussregler ist bei einem zweistufigen Verfahren in einem Abzweig einer ersten Rückführleitung zum Abzweigen eines bestimmten Teils des Reingases als Abluft angeordnet. In Kombination hiermit kann die Vorrichtung derart ausgebildet sein, dass stromab des Ringraums eine seitliche Austrittsöffnung zum Abzweig bestimmten Anteils des Austritts-Aerosols angeordnet ist.

Zur Durchführung des oben genannten zweistufigen Verfahrens ist nach der ersten Misch-Einrichtung mit der ersten Mischstufe sich eine weitere Misch-Einrichtung mit einer zweiten Mischstufe anschließt, der die Sensoreinrichtung nachgeordnet ist und die wiederum eine Rückführleitung zur Rückführung eines Teils des durch die Sensoreinrichtung tretenden Aerosolgemischs als Reingas in den Eingangsbereich der zweiten Mischstufe folgt, wobei ein dritter Abzweig-Massenflussregler in einem Abzweig der weiteren Rückführleitung zum Abzweig eines bestimmten Teils des durch die zweite Reinigungseinrichtung gereinigten partikelfreien Gases aus der zweiten Rückführleitung angeordnet ist.

In konkreter Ausgestaltung ist die zweistufige Vorrichtung durch mindestens eine erste Mischeinrichtung mit einem zu dieser führenden Einlassrohr für das Aerosol als Eintritts-Aerosol, einem stromab des Einlassrohrs gelegenen Auslass zu einer ersten Rückführleitung mit einer ersten Reinigungseinrichtung und einem ersten Massenflussregler und einer ersten Pumpe, wobei die erste Rückführleitung stromauf der Mündung des Einlassrohres in einen ersten einen Endbereich des Einlassrohres umgebenden Ringraum mündet, mit einem Übergangsrohr von der ersten Mischstufe zu einer zweiten Mischstufe, einem Auslassrohr und einer stromab desselben angeordneten Sensoreinrichtung, mit einer zweiten Reinigungs-Einrichtung und einer einen zweiten Massenflussregler aufweisenden zweiten Rückführleitung und einer Pumpe, wobei insbesondere ein dritter Massenflussregler in einem Abzweig der zweiten Rückführleitung zum Abzweig eines bestimmten Teils des durch die zweite Reinigungseinrichtung gereinigten partikelfreien Gases aus der zweiten Rückführleitung angeordnet ist.

Während in äußerst bevorzugter Ausgestaltung des Verfahrens der gewünschte Massenfluss durch Massenflussregler (MFC - Mass Flow Controller) konstant gehalten wird und Pumpen lediglich zur Aufrechterhaltung des Massenflusses an sich dienen und die erfindungsgemäße Vorrichtung bevorzugt diese Komponenten aufweist, kann grundsätzlich auch vorgesehen sein, dass der Massenfluss jeweils durch einen Durchflusssensor als IST-Wert gemessen und der erwünschte SOLL-Wert des Massendurchflusses durch Regelung einer Pumpe von Einlass- und Austrittsrohr (ein-)geregelt wird.

Die Innendurchmesser betragen dabei mehr als 0,3 x Vy, wobei y die Länge des Eintrittsrohres ist, mindestens aber 4 mm. Die Länge der Rohre liegt vorzugsweise in praktischer Weise bei 60 bis 80 mm. Der Innendurchmesser der Mischkammer beträgt vorzugsweise nicht mehr als das Zweifache der Rohrdurchmesser, insbesondere etwa das Doppelte.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im Einzelnen erläutert sind. Dabei zeigt:
- Fig. 1: Eine erste Ausführungsform einer erfindungsgemäßen Vorrichtung zum Verdünnen von Aerosol zur Durchführung des erfindungsgemäßen Verfahrens; und
- Fig. 2: eine zweite Ausgestaltung der erfindungsgemäßen Vorrichtung mit kaskadierten Verdünnungseinrichtungen.

Die erfindungsgemäße Vorrichtung 1 der Fig. 1 weist eine Mischeinrichtung mit einer Mischstufe 2, mit einem Einlassrohr 2.1, eine dieses umgebenden Ringraum 2.2 und einem

Auslass 2.3 auf. Im dargestellten Ausführungsbeispiel ist der Auslass 2.3 unmittelbar mit einer an sich bekannten optischen Sensoreinrichtung 3, wie einem Aerosolspektrometer, zur Bestimmung der Teilchen eines Aerosols hinsichtlich der Zahl pro Zeiteinheit durch ein Messvolumen der Sensoreinrichtung 3 tretenden Partikel und deren Größe verbunden.

Das aus der Sensoreinrichtung 3 über eine Rückführleitung 2.6 austretende Austritts-Aerosol wird über einen Massenflussregler (MTC - Mass Flow Controller) 4 von einer Pumpe 6 mit einem vorgegebenen Durchsatz von beispielsweise 5 l/min über eine Reinigungseinrichtung 5 in Form eines Filters abgesaugt. Die Reinigungseinrichtung 5 erzeugt aus dem der Sensoreinrichtung 3 abgesaugten Austritts-Aerosol ein reines, partikelfreies Reingas oder Gasgemisch (im Folgenden nur als Reingas bezeichnet) - wenn das Trägergas des in das Einlassrohr 2.1 eintretenden Eingangs-Aerosols Luft ist, dann wird durch den Filter Reinluft erzeugt.

Dieses Reingas wird über die Rückführleitung 2.6 stromauf des Auslassrohrs 2.3 der Mischeinrichtung 2 zu einem vorgegebenen Anteil, beispielsweise zu 90%, also bei der vorgenannten Absaugmenge von hier 5 l/min mit hier 4,5 l/min wieder zugeführt. Hier ist eine Abzweigleitung 2.7 einer Abzweigpumpe 2.5 und eines Massenflussreglers (MTC - Mass Flow Controller) 2.4 vorgesehen, mittels dessen der nicht gewünschte Restanteil von - hier - 10% bzw. 0,5 l/min als Abluft abgezweigt wird.

Insbesondere die Reinigungseinrichtung 5 kann auch stromab des Abzweigs der Abzweigleitung 2.7 aus der Rückführleitung 2.6 angeordnet sein, insbesondere wenn die Partikel des Aerosols unschädlich sind.

Das Einlassrohr 2.1 erstreckt sich mit seinem Rohrende in den Ringraum 2.2, der einen größeren Durchmesser hat als der Durchmesser des Einlassrohres 2.1 bzw. dessen Rohrendes. Das rückgeführte Reingas wird über einen seitlichen Einlass 2.1.1 oder bis zu vier über einen Umfang gleich verteilten seitliche Einlässe (die dann über eine äußere Rohrleitung verbunden sind) vor dem Auslass 2.1.2 des Rohres 2.1 dem Ringraum 2.2 zugeführt. Eintritts-Aerosol und Reingas treten gemeinsam in die Einlassöffnung des Austritts-Rohres oder Auslasses 2.3, in der sie dann vermischt und das Aerosol zu einem verdünnten Austritts-Aerosol verdünnt wird.

Durch diese Ausgestaltung wird eine intensive Durchmischung des durch das Eintrittsrohr 2.1 eintretenden konzentrierten Eingangs-Aerosols mit dem seitlich über den Einlass 2.1.1 zugeführten Reingas erreicht.

Über das Einlassrohr 2.1 wird hochkonzentriertes Eintritts-Aerosol mit einem vorgegebenen Volumenstrom der Mischstufe 2 zugeführt. Dieses Eingangsaerosol wird mit dem geregelten vorgegebenen Volumenstrom des Reingases mit der gleichen Gaszusammensetzung wie das Gas des Eingangs-Aerosols aufgrund der konstruktiven Ausgestaltung der Mischeinrichtung 2.2 intensiv vermischt. Das Eingangsaerosol wird - nach einer Anlaufphase - im Messbetrieb zu einem aufgrund des gegebenen Mischungsverhältnisses bestimmten verdünnten aus dem Rohrende des Auslassrohres 2.3 austretenden Austritts-Aerosols verdünnt, - hier - im Verhältnis 1:10, das in der Messphase in üblicher Weise in der Sensoreinrichtung 3 gemessen werden kann, also insbesondere hinsichtlich zeitlichem Partikeldurchsatz und Größe der Partikel. Das aus der Sensoreinrichtung 3 austretende verdünnte Aerosol wird durch den Filter über den Massenflussregler 4 und die Pumpe 6 abgesaugt, dabei zu einem Reingas-Gemisch gereinigt und mit dem beschriebenen Anteil von 90% bzw. 4,5 l/min in der ebenfalls beschriebenen Weise der Mischeinrichtung 2 wieder zugeführt. In einer konkreten Ausführung beträgt der Massenfluss des Eintritts-Aerosols beispielsweise Vₐ = 0,5 l/min. und einer Anlaufphase im Messbetrieb des durch die Messeinrichtung strömenden verdünnten Aerosols Vᵥ = 5 l/min. und der der beigemischten Reinluft (Reingas) Vᵣ = 4,5 l/min., während die Abluft mit 0,5 l/min. ins Freie abgelassen wird.

Durch die erfindungsgemäße Vorrichtung und das beschriebene erfindungsgemäße Verfahren wird eine Verdünnung eines konzentrierten Aerosols hinsichtlich der in ihm enthaltenen Partikel mit dem gleichen Gas oder Gasgemisch, insbesondere Luft, wie es das konzentrierte Eintritts-Aerosol hat, erreicht, also insbesondere hinsichtlich Gaszusammensetzung, Gastemperatur und Gasfeuchte.

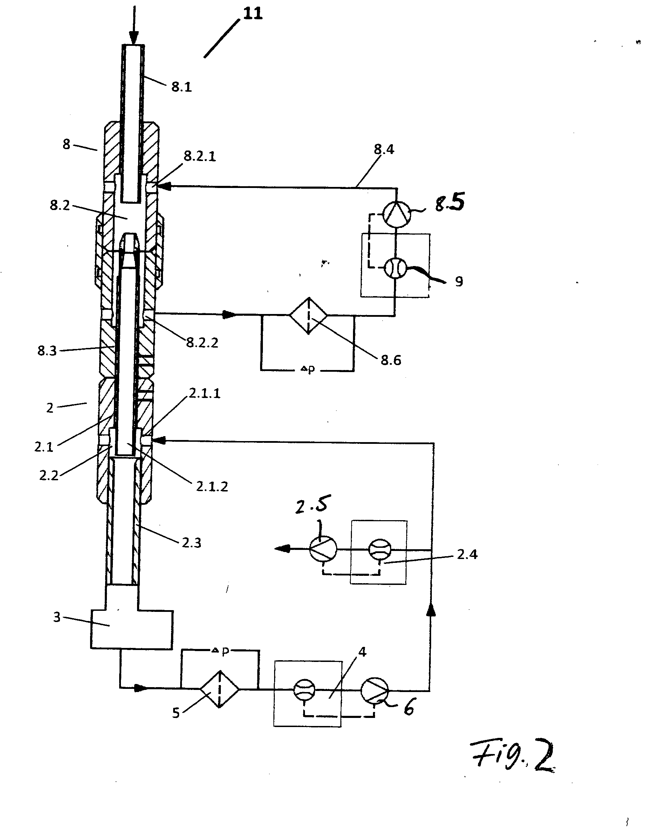

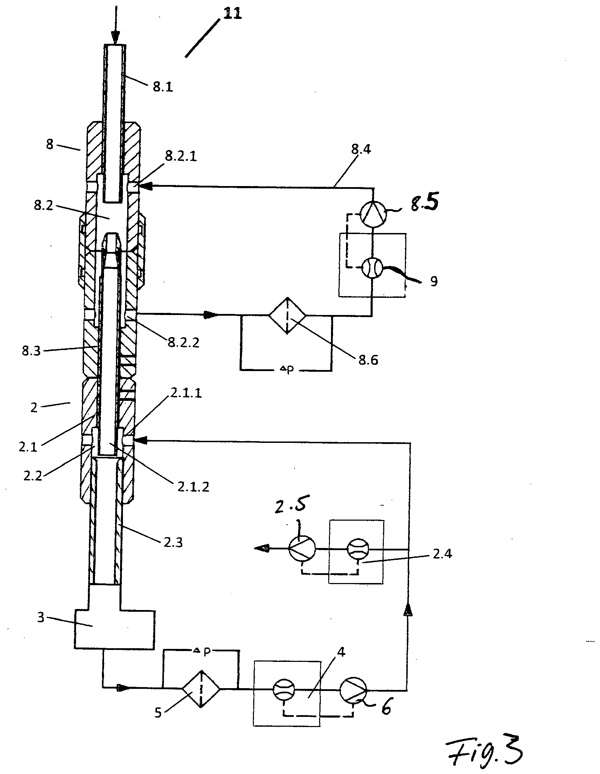

Die Ausgestaltung der Fig. 2 ist eine Kaskadierung der Mischeinrichtung der Fig. 1 mit einer weiteren Ausgestaltung einer Mischeinrichtung. Die weitere Mischeinrichtung 8 mit einer Mischstufe ist der Mischeinrichtung mit der Mischstufe 2 der Fig. 1 vorgeschaltet.

Die vorgeschaltete Mischeinrichtung 8 mit der Mischstufe ist eine Variante einer erfindungsgemäßen Vorrichtung der Fig. 1. Diese ist grundsätzlich in gleicher Weise ausgebildet wie die unter Bezugnahme auf die in der Fig. 1 beschriebene Vorrichtung 1. Die Mischeinrichtung 8 hat ein Einlassrohr 8.1 mit geringem Durchmesser gegenüber einem umgebenden Ringraum 8.2. Mit Abstand zum Rohrende 8.1.1 ist ein Auslassrohr 8.3 vorgesehen zu einer Sensoreinrichtung (nicht dargestellt) entsprechend der Sensoreinrichtung 3. Das Auslassrohr 8.3 weist ebenfalls einen geringeren Querschnitt auf als der ihn umgebende Bereich des Ringraums 8.2. Aus diesem umgebenen Ringraum 8.2 führt hier ein seitlicher Auslass 8.2.2 zu einer Rückführleitung 8.4, in der eine Reinigungseinrichtung 8.6, eine Pumpe 8.7 und ein Massenflussregler 9 angeordnet sind.

Der Verfahrensablauf der Mischeinrichtung 8 an sich ist der gleiche wie bei der Ausgestaltung der Fig. 1 beschriebenen mit den im Folgenden genannten Abweichungen.

Aus dem Ringraum 8.2 wird ein gewünschter fest vorgegebener Anteil des diesen durchströmenden Aerosols von beispielsweise 90% oder hier 4,5l/min über den Auslass 8.2.2 abgezweigt und mittels der Reinigungseinrichtung 8.6 zu einem partikelfreien Reingas gereinigt. Die Absaugung erfolgt durch die Pumpe 9 über einen Massenflussregler 9, durch den der vorgenannte Prozentsatz bzw. das vorgenannte Durchtrittsvolumen festgelegt wird. Dieses Reingas wird dann über den stromauf des Auslasses 8.2.2 liegenden Einlass 8.2.1 dem Ringraum 8.2 zugeführt und mit dem Eintritts-Aerosol vermischt.

Es erfolgt eine intensive Durchmischung des durch die Einlassleitung 8.1 eintretenden Eintritts-Aerosols mit dem über den seitlichen Einlass 8.2.1 zugeführten Reingas, insbesondere Luft (wenn das Trägergas des Eintritts-Aerosols Luft ist), hier insbesondere im Zwischenraum des Ringraums 8.2 zwischen Austrittsende des Einlassrohrs 8.1 und Eintrittsöffnung des Austrittsrohrs 8.3. In dieser Weise erfolgt eine Verdünnung von 1:10.

Der Anteil des den folgenden Mischraum mit einem Massenflussvolumen von hier 5 l/min durchströmenden verdünnten Aerosols, der nicht über den Auslass 8.2.2 abgezweigt wird, strömt als verdünntes Austritts-Aerosol durch das Auslassrohr 8.3 und kann - wie bei der Ausgestaltung der Fig. 1 - einer Sensoreinrichtung 3 zugeführt werden.

Zur Ausgestaltung der nachfolgend angeordneten einzelnen Mischeinrichtung 2 wird auf die obigen Ausführungen zu der Fig. 1 verwiesen. Bei der Ausgestaltung der Fig. 2 bildet das Austrittsrohr 8.3 der Mischstufe 8 gleichzeitig das Eintrittsrohr 8.1 der Teilmischeinrichtung 2.

Zunächst erfolgt eine Verdünnung des Eintritts-Aerosols in der Mischstufe 8 durch die Absaugung des Aerosols über den Auslass 8.2.2, die Reinigung über die Reinigungseinrichtung 8.6 und über den Massenflussregler geregelte Rückführung des so gereinigten partikelfreien Reingases über den Einlass 8.2.1 und dessen Vermischung mit dem über das Rohr 8.1 eintretenden Eintritts-Aerosol wird vorstehend beschrieben.

Dieses verdünnte Aerosol (beispielsweise um den Faktor 10:1) wird über das Zwischenrohr 8.3, 2.1 in die Mischeinrichtung 2 geleitet. Das verdünnte Aerosol tritt durch die Sensoreinrichtung 3, wird weiter über die Reinigungseinrichtung 5 zu einem partikelfreien Reingas gereinigt, wobei der Gasabzug über den Massenflussregler erfolgt. Es erfolgt die Abzweigung einer vorbestimmten Menge, wie oben unter Bezug auf die Fig. 1 beschrieben aus dem so gereinigten Reingas, während der vorbestimmte feste Rest des Reingases (hier 90% bzw. 4,5 l/min) über den Einlass 2.1.2 dem Ringraum 2.2 der Mischeinrichtung 2 zugeführt wird und dort, wie gesagt, die weitere Verdünnung von 10:1 bewirkt, so dass insgesamt eine Verdünnung des durch die Sensoreinrichtung 3 strömenden Austritts-Aerosols von 100:1 bewirkt wird.

Durch die Ausgestaltung der Fig. 2 kann eine potenzierte Verdünnung des durch das Eintrittsrohr 8.1 eintretenden Eintritts-Aerosols erreicht werden. Wenn bei der Ausgestaltung der Fig. 2, wie vorstehend unter Bezug auf die Fig. 1 beschrieben, jede der Mischeinrichtungen 8, 2 eine Verdünnung im Verhältnis von 10:1 bewirkt, so wird durch die Kaskadierung der Ausgestaltung der Fig. 2 eine Verdünnung von 100:1 bewirkt.

## Patentansprüche

1. Verfahren zum Verdünnen eines Aerosols,
- wobei das Aerosol als Eingangs-Aerosol durch ein von einem Ringraum (2.2) umgebenes Zuführrohr (2.1) einer Mischstufe (2) zugeführt wird, über einen Auslass (2.3) austretendes Austritts-Aerosol zu einem partikelfreien Reingas gereinigt und partikelfreies Reingas dem Ringraum (2.2.) stromauf des Auslasses (2.3) zugeführt und mit dem Aerosol vermischt wird,
- wobei das Austritts-Aerosol vor der Reinigung durch eine optische Sensoreinrichtung (3) zum Bestimmen sowohl der durch ein Messvolumen derselben pro Zeiteinheit tretenden Teilchenzahl des Austritts-Aerosols als auch der Teilchengröße geleitet wird und
- wobei das Verhältnis von Volumendurchfluss des Eingangs-Aerosols und des diesem zugeführten Reingases durch einen Massenflussregler (2.4, 4) bestimmt wird.

2. Verfahren nach Anspruch 1, **dadurch gekennzeichnet, dass** das Reingas dem Eingangs-Aerosol in einem fest vorgegebenen Volumendurchflussverhältnis zugeführt wird.

3. Verfahren nach Anspruch 1 oder 2, **dadurch gekennzeichnet, dass** das Zuführrohr (2.1) einen geringeren Querschnitt hat als der Ringraum (2.2) und dass das dem Ringraum (2.2) zugeführte Reingas oberhalb eines Auslassendes (2.1.2) des Zuführrohrs (2.1) in den Ringraum (2.2) eingeleitet wird.

4. Verfahren nach einem der vorangehenden Ansprüche, **dadurch gekennzeichnet, dass** übermäßiges Reingas als Abluft abgeführt wird.

5. Vorrichtung zum Verdünnen eines Aerosols
- mit einem Aerosol als Eingangs-Aerosol zu führenden Zuführrohr (2.1),
- mit mindestens einer Mischstufe (2),
- mit einem Austrittsrohr (2.3),
- mit einer sich stromab anschließenden Reinigungseinrichtung (5) zum Reinigen von aus der Mischstufe (2) über das Austrittsrohr (2.3) austretendem Austritts-Aerosol zu einem partikelfreien Reingas,
- mit einer stromauf in einen das Zuführrohr (2.1) umgebenden Ringraum (2.2) führenden Rückführleitung (2.6) für das Reingas,
- einer von verdünntem Austritts-Aerosol durchströmte zum Bestimmen sowohl der durch ein Messvolumen derselben pro Zeiteinheit tretenden Teilchenzahl des Austritts-Aerosols als auch der Teilchengröße ausgebildete optische Sensoreinrichtung (3) und
- mit einem Massenflussregler (4) in der Rückführleitung (2.6) und einer Pumpe (6) in der Rückführleitung (2.6) zum Absaugen des Austritts-Aerosols aus dem Austrittsrohr (2.3).

6. Vorrichtung nach Anspruch 5, **dadurch gekennzeichnet, dass** das Zuführrohr (2.1) einen geringeren Querschnitt aufweist als der Ringraum (2.2) und ein Auslass (2.1.1) der Rückführleitung (2.6) in den Ringraum (2.2) stromauf des Austrittsendes (2.1.2) des Zuführrohres (2.2) angeordnet ist.

7. Vorrichtung nach einem der Ansprüche 5 oder 6, **dadurch gekennzeichnet, dass** ein Abzweig-Massenflussregler (2.4) in einem Abzweig der Rückführleitung (2.6) zum Abzweigen eines bestimmten Teils des Reingases als Abluft angeordnet ist.

8. Vorrichtung zum Verdünnen eines Aerosols,
- mit mindestens einer ersten Mischstufe (8), mit einem Aerosol als Eingangs-Aerosol zuführenden Zuführrohr (8.1), einem stromab des Zuführrohrs (8.1) gelegenen Auslass (8.2.2) zu einer ersten Rückführung (8.4) mit einer ersten Reinigungseinrichtung (8.6) zum Reinigen von aus der ersten Mischstufe (8) austretendem Austritts-Aerosol zu einem partikelfreien Reingas, einem ersten Massenflussregler (9) und einer ersten Pumpe (8.7) und wobei die erste Rückführleitung für das Reingas stromauf der Mündung des Zuführrohres (8.1) in einen ersten einen Endbereich des Zuführrohres umgebenden Ringraum (8.2) mündet,
- mit einer sich an die mindestens eine erste Mischstufe (8) anschließenden zweiten Mischstufe (2) mit einem Übergangsrohr (8.3) von der ersten Mischstufe (8) zu der zweiten Mischstufe (2), mit einem Austrittsrohr (2.3) von dem eine zweite Rückführleitung (2.6) mit einer von verdünntem Austritts-Aerosol durchströmten zum Bestimmen sowohl der durch ein Messvolumen derselben pro Zeiteinheit tretenden Teilchenzahl des Austritts-Aerosols als auch der Teilchengröße ausgebildeten optischen Sensoreinrichtung (3),
- mit einer weiteren Reinigungseinrichtung (5), mit einem zweiten Massenflussregler (4) in der zweiten Rückführleitung (2.6) und einer zweiten Pumpe (5) zum Absaugen von Austritts-Aerosol aus dem Austrittsrohr (2.3) der zweiten Mischstufe (2) zu einem zweiten Ringraum (2.2) um das Übergangsrohr (8.3) der zweiten Mischstufe führt.

9. Vorrichtung nach Anspruch 8, **dadurch gekennzeichnet, dass** ein dritter Abzweig-Massenflussregler (2.4) in einem Abzweig der zweiten Rückführleitung (2.6) zum Abzweig eines bestimmten Teils des durch die zweite Reinigungseinrichtung (5) gereinigten partikelfreien Gases aus der zweiten Rückführleitung (2.6) angeordnet ist.

10. Verfahren zum Verdünnen eines Aerosols mit der Vorrichtung nach einem der Ansprüche 8-9,
- wobei das Aerosol als Eingangs-Aerosol durch das von dem ersten Ringraum (8.2) umgebene Zuführrohr (8.1) der ersten Mischstufe (8) zugeführt wird, über den Auslass (8.2.2) austretendes Austritts-Aerosol zu einem partikelfreien Reingas gereinigt wird,
- wobei partikelfreies Reingas dem ersten Ringraum (8.2) stromauf des Auslasses (8.2.2) und eines Auslasses des Zuführrohrs (8.1) zugeführt und mit dem Aerosol vermischt wird,
- wobei stromab des ersten Ringraums (8.2) ein fester Teil des aus der ersten Mischstufe (8) austretenden Aerosols über das Übergangsrohr (8.3) der zweiten Mischstufe (2) einer zweiten Verfahrensstufe zugeführt wird und
- wobei Austritts-Aerosol der zweiten Mischstufe (2) durch die optische Sensoreinrichtung (3) zum Bestimmen sowohl der durch ein Messvolumen derselben pro Zeiteinheit tretenden Teilchenzahl des Austritts-Aerosols als auch der Teilchengröße geleitet wird, zu einem partikelfreien Reingas gereinigt und dieses Reingas durch den zweiten Massenflussregler dem zweiten Ringraum (2.2) stromauf des Austritts des Übergangsrohrs (8.3) der zweiten Mischstufe (2) wieder zugeführt wird.

11. Verfahren nach Anspruch 10, **dadurch gekennzeichnet, dass** das Reingas dem Eingangs-Aerosol in einem fest vorgegebenen Volumendurchflussverhältnis zugeführt wird.

12. Verfahren nach Anspruch 10 oder 11, **dadurch gekennzeichnet, dass** das Zuführrohr (8.1) oder das Übergangsrohr (8.3), welches das Aerosol in den jeweiligen Mischraum zuführt, einen geringeren Querschnitt hat als der diesem zugeordneter Ringraum (2.2, 8.2) und dass das dem jeweiligen Ringraum (2.2, 8.2) zugeführte Reingas oberhalb eines Auslassendes (2.1.2) des Zuführrohrs (8.1) oder des Übergangsrohrs (8.3) zu einem jeweiligen Mischraum in den Ringraum (2.2, 8.2) eingeleitet wird.

13. Verfahren nach einem der Ansprüche 10 bis 12, **dadurch gekennzeichnet, dass** übermäßiges Reingas der weiteren Rückführleitung (2.6) als Abluft abgeführt wird.

## Claims

1. Method for diluting an aerosol,
- wherein the aerosol is supplied as input aerosol through a supply tube (2.1) surrounded by an annular space (2.2) to a mixing stage (2), and output aerosol exiting via an outlet (2.3) is purified to form a particle-free purified gas, and particle-free purified gas is supplied to the annular space (2.2) upstream of the outlet (2.3) and mixed with the aerosol,
- wherein the output aerosol is conducted, before purification, through an optical sensor device (3) for determining the particle number of the output aerosol that passes through a measurement volume of the sensor device per unit of time, and the particle size, and
- wherein the ratio of volume flow of the input aerosol to that of the purified gas supplied thereto is determined by means of a mass flow controller (2.4, 4).

2. Method according to claim 1, **characterized in that** the purified gas is supplied to the input aerosol in a fixed predetermined volume flow ratio.

3. Method according to either claim 1 or claim 2, **characterized in that** the supply tube (2.1) has a smaller cross section than the annular space (2.2), **and in that** the purified gas supplied to the annular space (2.2) is introduced into the annular space (2.2) above an outlet end (2.1.2) of the supply tube (2.1).

4. Method according to any of the preceding claims, **characterized in that** excess purified gas is discharged as exhaust air.

5. Apparatus for diluting an aerosol, having
- a supply tube (2.1) supplying an aerosol as inlet aerosol,
- at least one mixing stage (2),
- an outlet tube (2.3),
- a purification device (5) connected downstream for purifying output aerosol exiting the mixing stage (2) via the outlet tube (2.3) to form a particle-free purified gas,
- a return line (2.6) for the purified gas leading upstream into an annular space (2.2) surrounding the supply tube (2.1),
- an optical sensor device (3), through which diluted output aerosol flows, and which is designed to determine the particle number of the output aerosol that passes through a measurement volume of the sensor device per unit of time, and the particle size, and
- a mass flow controller (4) in the return line (2.6) and a pump (6) in the return line (2.6) for drawing the output aerosol from the outlet tube (2.3).

6. Apparatus according to claim 5, **characterized in that** the supply tube (2.1) has a smaller cross section than the annular space (2.2), and an outlet (2.1.1) of the return line (2.6) into the annular space (2.2) is arranged upstream of the outlet end (2.1.2) of the supply tube (2.2).

7. Apparatus according to either of claims 5 or 6, **characterized in that** a branch mass flow controller (2.4) is arranged in a branch of the return line (2.6) for diverting a determined portion of the purified gas as exhaust air.

8. Apparatus for diluting an aerosol, having
- at least one first mixing stage (8), a supply tube (8.1) supplying an aerosol as inlet aerosol, an outlet (8.2.2), located downstream of the supply tube (8.1), to a first return (8.4), which has a first purification device (8.6) for purifying output aerosol exiting the first mixing stage (8) to form a particle-free purified gas, a first mass flow controller (9), and a first pump (8.7), and wherein the first return line for the purified gas opens upstream of the mouth of the supply tube (8.1) into a first annular space (8.2) surrounding an end region of the supply tube,
- a second mixing stage (2) adjoining the at least one first mixing stage (8), which second mixing stage has a transition tube (8.3) from the first mixing stage (8) to the second mixing stage (2), an outlet tube (2.3) from which a second return line (2.6) having an optical sensor device (3) through which diluted output aerosol flows and which is designed to determine the particle number of the output aerosol that passes through a measurement volume of the sensor device per unit of time, and the particle size,
- a further purification device (5), a second mass flow controller (4) in the second return line (2.6), and a second pump (5) for drawing output aerosol from the outlet tube (2.3) of the second mixing stage (2) to a second annular space (2.2) around the transition tube (8.3) of the second mixing stage leads.

9. Apparatus according to claim 8, **characterized in that** a third branch mass flow controller (2.4) is arranged in a branch of the second return line (2.6) for diverting a determined portion of the particle-free gas purified by the second purification device (5) from the second return line (2.6).

10. Method for diluting an aerosol using the apparatus according to any of claims 8 to 9,
- wherein the aerosol is supplied as input aerosol through the supply tube (8.1) surrounded by the first annular space (8.2) to the first mixing stage (8), and output aerosol exiting via the outlet (8.2.2) is purified to form a particle-free purified gas,
- wherein particle-free purified gas is supplied to the first annular space (8.2) upstream of the outlet (8.2.2) and an outlet of the supply tube (8.1) and is mixed with the aerosol,
- wherein, downstream of the first annular space (8.2), a fixed portion of the aerosol exiting the first mixing stage (8) is supplied to a second process stage via the transition tube (8.3) of the second mixing stage (2), and
- wherein output aerosol of the second mixing stage (2) is conducted through the optical sensor device (3) for determining the particle number of the output aerosol that passes through a measurement volume of the sensor device per unit of time, and the particle size, and is purified to form a particle-free purified gas, and said purified gas is again supplied to the second annular space (2.2) upstream of the outlet of the transition tube (8.3) of the second mixing stage (2) by means of the second mass flow controller.

11. Method according to claim 10, **characterized in that** the purified gas is supplied to the input aerosol in a fixedly predetermined volume flow ratio.

12. Method according to either claim 10 or claim 11, **characterized in that** the supply tube (8.1) or the transition tube (8.3), which supplies the aerosol into the relevant mixing chamber, has a smaller cross section than the annular space (2.2, 8.2) associated therewith, **and in that** the purified gas supplied to the relevant annular space (2.2, 8.2) is introduced into the annular space (2.2, 8.2) above an outlet end (2.1.2) of the supply tube (8.1) or of the transition tube (8.3) to a relevant mixing chamber.

13. Method according to any of claims 10 to 12, **characterized in that** excess purified gas of the further return line (2.6) is discharged as exhaust air.

## Revendications

1. Procédé permettant la dilution d'un aérosol,
- dans lequel l'aérosol est amené en tant qu'aérosol d'entrée à un étage mélangeur (2) par un tube d'amenée (2.1) entouré d'un espace annulaire (2.2), un aérosol de sortie sortant par l'intermédiaire d'un échappement (2.3) est purifié en un gaz purifié exempt de particules et le gaz purifié exempt de particules est amené à l'espace annulaire (2.2.) en amont de l'échappement (2.3) et mélangé à l'aérosol,
- dans lequel, avant la purification, l'aérosol de sortie est conduit à travers un appareil formant capteur optique (3) permettant de déterminer à la fois le nombre de particules de l'aérosol de sortie passant à travers un volume de mesure dudit appareil par unité de temps et la taille des particules et
- dans lequel le rapport d'un débit volumique de l'aérosol d'entrée à celui du gaz purifié qui lui est amené est déterminé par un régulateur de débit massique (2.4, 4).

2. Procédé selon la revendication 1, **caractérisé en ce que** le gaz purifié est amené à l'aérosol d'entrée dans un rapport de débit volumique prédéfini fixe.

3. Procédé selon la revendication 1 ou 2, **caractérisé en ce que** le tube d'amenée (2.1) possède une section transversale plus petite que celle de l'espace annulaire (2.2) **et en ce que** le gaz purifié amené à l'espace annulaire (2.2) est introduit dans l'espace annulaire (2.2) au-dessus d'une extrémité d'échappement (2.1.2) du tube d'amenée (2.1).

4. Procédé selon l'une des revendications précédentes,
**caractérisé en ce qu'**un excès de gaz purifié est évacué en tant qu'air vicié.

5. Dispositif permettant la dilution d'un aérosol
- comportant un tube d'amenée (2.1) amenant un aérosol en tant qu'aérosol d'entrée,
- comportant au moins un étage mélangeur (2),
- comportant un tube de sortie (2.3),
- comportant un appareil de purification (5) raccordé en aval et permettant de purifier un aérosol de sortie sortant de l'étage mélangeur (2) par l'intermédiaire du tube de sortie (2.3) en un gaz purifié exempt de particules,
- comportant une conduite de retour (2.6) destinée au gaz purifié et menant en amont dans un espace annulaire (2.2) entourant le tube d'amenée (2.1),
- un appareil formant capteur optique (3) traversé par un aérosol de sortie dilué et configuré pour déterminer à la fois le nombre de particules de l'aérosol de sortie passant à travers un volume de mesure dudit appareil par unité de temps et la taille des particules et
- comportant un régulateur de débit massique (4) dans la conduite de retour (2.6) et une pompe (6) dans la conduite de retour (2.6) permettant l'extraction de l'aérosol de sortie hors du tube de sortie (2.3).

6. Dispositif selon la revendication 5, **caractérisé en ce que** le tube d'amenée (2.1) présente une section transversale plus petite que celle de l'espace annulaire (2.2) et un échappement (2.1.1) de la conduite de retour (2.6) est disposé dans l'espace annulaire (2.2) en amont de l'extrémité de sortie (2.1.2) du tube d'amenée (2.2).

7. Dispositif selon l'une des revendications 5 ou 6, **caractérisé en ce qu'**un régulateur de débit massique de dérivation (2.4) est disposé dans une dérivation de la conduite de retour (2.6) permettant la dérivation d'une proportion déterminée du gaz purifié en tant qu'air vicié.

8. Dispositif permettant la dilution d'un aérosol,
- comportant au moins un premier étage mélangeur (8), comportant un tube d'amenée (8.1) amenant un aérosol en tant qu'aérosol d'entrée, un échappement (8.2.2) situé en aval du tube d'amenée (8.1) vers un premier retour (8.4) comportant un premier appareil de purification (8.6) permettant la purification d'un aérosol de sortie sortant du premier étage mélangeur (8) en un gaz purifié exempt de particules, un premier régulateur de débit massique (9) et une première pompe (8.7) et dans lequel la première conduite de retour destinée au gaz purifié débouche en amont de l'embouchure du tube d'amenée (8.1) dans un premier espace annulaire (8.2) entourant une zone d'extrémité du tube d'amenée,
- comportant un second étage mélangeur (2) raccordé à l'au moins un premier étage mélangeur (8), comportant un tube de transition (8.3) allant du premier étage mélangeur (8) au second étage mélangeur (2), comportant un tube de sortie (2.3) depuis lequel une seconde conduite de retour (2.6) comportant un appareil formant capteur optique (3) traversé par un aérosol de sortie dilué et configuré pour déterminer à la fois le nombre de particules de l'aérosol de sortie passant à travers un volume de mesure dudit appareil par unité de temps et la taille des particules,
- comportant un autre appareil de purification (5), comportant un deuxième régulateur de débit massique (4) dans la seconde conduite de retour (2.6) et une seconde pompe (5) permettant l'extraction de l'aérosol de sortie hors du tube de sortie (2.3) du second étage mélangeur (2) vers un second espace annulaire (2.2) autour du tube de transition (8.3) du second étage mélangeur mène.

9. Dispositif selon la revendication 8, **caractérisé en ce qu'**un troisième régulateur de débit massique de dérivation (2.4) est disposé dans une dérivation de la seconde conduite de retour (2.6) permettant la dérivation d'une proportion déterminée du gaz exempt de particules purifié par le second appareil de purification (5) hors de la seconde conduite de retour (2.6).

10. Procédé permettant la dilution d'un aérosol avec le dispositif selon l'une des revendications 8 à 9,
- dans lequel l'aérosol est amené en tant qu'aérosol d'entrée au premier étage mélangeur (8) par le tube d'amenée (8.1) entouré du premier espace annulaire (8.2), un aérosol de sortie sortant par l'intermédiaire de l'échappement (8.2.2) est purifié en un gaz purifié exempt de particules,
- dans lequel le gaz purifié exempt de particules est amené au premier espace annulaire (8.2) en amont de l'échappement (8.2.2) et d'un échappement du tube d'amenée (8.1) et mélangé à l'aérosol,
- dans lequel, en aval du premier espace annulaire (8.2), une proportion fixe de l'aérosol sortant du premier étage mélangeur (8) est amenée au second étage mélangeur (2) d'une seconde étape de procédé par l'intermédiaire du tube de transition (8.3) et
- dans lequel un aérosol de sortie du second étage mélangeur (2) est guidé à travers l'appareil formant capteur optique (3) permettant de déterminer à la fois le nombre de particules de l'aérosol de sortie passant à travers un volume de mesure dudit appareil par unité de temps et la taille des particules, purifié en un gaz purifié exempt de particules et ledit gaz purifié est à nouveau amené par le deuxième régulateur de débit massique au second espace annulaire (2.2) en amont de la sortie du tube de transition (8.3) du second étage mélangeur (2).

11. Procédé selon la revendication 10, **caractérisé en ce que** le gaz purifié est amené à l'aérosol d'entrée dans un rapport de débit volumique prédéfini fixe.

12. Procédé selon la revendication 10 ou 11, **caractérisé en ce que** le tube d'amenée (8.1) ou le tube de transition (8.3), lequel amène l'aérosol dans l'espace mélangeur respectif, possède une section transversale plus petite que celle de l'espace annulaire (2.2, 8.2) qui lui est associé **et en ce que** le gaz purifié amené à l'espace annulaire (2.2, 8.2) respectif est introduit dans l'espace annulaire (2.2, 8.2) au-dessus d'une extrémité d'échappement (2.1.2) du tube d'amenée (8.1) ou du tube de transition (8.3) vers un espace mélangeur respectif.

13. Procédé selon l'une des revendications 10 à 12, **caractérisé en ce qu'**un excès de gaz purifié de l'autre conduite de retour (2.6) est évacué en tant qu'air vicié.
